(19) **Europäisches Patentamt European Patent Office Office européen des brevets**

(11) **EP 4 682 505 A1**

(12) **EUROPEAN PATENT APPLICATION**
published in accordance with Art. 153(4) EPC

(43) Date of publication:
21.01.2026 Bulletin 2026/04

(51) International Patent Classification (IPC):
$G01N\ 3/22^{(2006.01)}$  $G01N\ 3/24^{(2006.01)}$

(21) Application number: 24806989.0

(22) Date of filing: 23.04.2024

(52) Cooperative Patent Classification (CPC):
G01N 3/22; G01N 3/24

(86) International application number:
PCT/JP2024/015860

(87) International publication number:
WO 2024/237035 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.05.2023 JP 2023080530

(71) Applicant: JFE Steel Corporation
Tokyo 100-0011 (JP)

(72) Inventors:
• ISHIWATARI, Akinobu
Tokyo 100-0011 (JP)
• TAMASHIRO, Fumiaki
Tokyo 100-0011 (JP)

(74) Representative: Haseltine Lake Kempner LLP
Bürkleinstrasse 10
80538 München (DE)

(54) **STRESS-STRAIN RELATIONSHIP ESTIMATION METHOD**

(57) A stress-strain curve estimation method according to the present invention includes a step (S1) of performing a torsion test of a first round-bar specimen 10 to acquire a relationship between a torsional torque and a torsional angle, a step (S3) of performing a torsion test of a second round-bar specimen 10 having a reduced section 11 having a radius smaller than that of the first round-bar specimen 10 to acquire a relationship between a torsional torque and a torsional angle, a step (S5) of obtaining a relationship between sheared stress and shear strain of surface based on the relationships between the torsional torques and the torsional angles acquired by the torsion tests of the first round-bar specimen 10 and the second round-bar specimen 10, and a step (S7) of converting the sheared stress and the shear strain of surface into stress and strain in simple tension to estimate a relationship between stress and strain.

FIG.1

START

FIRST TORSION TEST STEP — S1

SECOND TORSION TEST STEP — S3

SHEARED STRESS-SURFACE SHEAR STRAIN CURVE ACQUISITION STEP — S5

STRESS-STRAIN CURVE ESTIMATION STEP — S7

END

EP 4 682 505 A1

**Description**

Field

The present invention relates to a stress-strain curve estimation method, and particularly relates to a stress-strain curve estimation method enabling accurate estimation of a relationship between stress and strain in a strain portion larger than uniform elongation, exceeding uniform elongation of a metal material.

Background

In press forming of a metal sheet material that may be subjected to deformation exceeding uniform elongation in uniaxial tension of the material, it is important to grasp property of work-hardening (stress-strain curve) after the uniform elongation in the uniaxial tension to perform press forming analysis using highprecision finite element analysis. In particular, a super high tension material has very small uniform elongation (e.g., uniform elongation of 1180 MPa steel is 6 to 7%), and therefore, it is important to grasp a relationship between stress and strain after uniform elongation (e.g., up to elongation of approximately 20%).

There have been proposed methods for acquiring the stress-strain curve by using a bulging test (Non Patent Literature 1), a compression test (Non Patent Literature 2), a shearing test (Non Patent Literature 3, Patent Literature 1), and the like. These test methods have a deformation state in which necking is less likely to occur than in a normal uniaxial tensile test and large deformation is applicable, and therefore, the relationship between stress and strain after uniform elongation in uniaxial tension is allowed to be acquired. In addition, a method of estimating the relationship between stress and strain in the strain portion larger than uniform elongation after occurrence of necking by using the uniaxial tensile test has also been proposed (Non Patent Literature 4 and Patent Literature 2). In this method, a tensile load acting on a tensile test specimen is obtained by using theoretical calculation, from a strain distribution measured by a digital image correlation (DIC) method or the like.

Citation List

Patent Literature

[0004]

　　　Patent Literature 1: JP 5910803 B2
　　　Patent Literature 2: JP 6669290 B1

Non Patent Literature

[0005]

　　　Non Patent Literature 1: Nasser, A. et al.: J. Mater. Proc. Technol., 210 (2010), 429-436.
　　　Non Patent Literature 2: Iwata et al.: JOURNAL OF THE JAPAN SOCIETY FOR TECHNOLOGY OF PLASTICITY SOSEI-TO-KAKO, 54-632 (2013), 836-840.
　　　Non Patent Literature 3: Sumikawa et al.: JOURNAL OF THE JAPAN SOCIETY FOR TECHNOLOGY OF PLASTICITY SOSEI-TO-KAKO, 62-727 (2021), 103-108.
　　　Non Patent Literature 4: Shirakami et al.: TETSU-TO-HAGANE, 103-10 (2017), 589-595.

Summary

Technical Problem

However, the bulging test of Non Patent Literature 1 provides the relationship between stress and strain in an equi-biaxial tensile stress state (state of isotropic application of stress in a plane), and the compression test of Non Patent Literature 2 provides the stress-strain curve in a compressed state. In order to use results obtained from these tests in press forming analysis using finite element analysis, it is necessary to convert the results into the relationship between stress and strain corresponding to the uniaxial tension, and there is a possibility that an error occurs depending on an anisotropic yield function used in the conversion.

In addition, in the bulging test, strain and stress are often obtained assuming that equal strain and equal stress are applied to respective apex portions of the specimen, regardless of the directions thereof. In recent years, the influence of the direction of strain has been considered by measuring the strain using the DIC, but the stress has been estimated to be constant regardless of the direction, based on hydraulic pressure as before. Therefore, it is considered that there is an error in the stress estimated in this way, and it cannot be said that the obtained relationship between stress and strain is sufficiently accurate. Furthermore, a special test machine is required to perform the bulging test, and therefore, it is not practical in terms of versatility. In addition, even in the bulging test, necking is finally generated in the specimen, leading to fracture, and therefore, it is not possible to acquire the stress-strain curve up to the vicinity of the strain portion larger than uniform elongation where the necking is generated.

Meanwhile, in the compression test of Non Patent Literature 2, although necking does not occur even when strain applied to the specimen increases, friction with a jig pressing the specimen and the influence of the jig are large, and it is necessary to perform correction using the finite element analysis. In addition, in order to apply the compression test to a steel sheet, stacking of steel sheets is required from the viewpoint of measuring strain in thickness direction, and it is considered that there is an error due to the stacking.

In addition, in the methods of Non Patent Literature 3 and Patent Literature 1, it is necessary to assume requirements (e.g., an associated flow rule being a relational expression representing a relationship between, the anisotropic yield function, and the like that are relational expressions representing a relationship between plastic strain increment and stress state, anisotropic yield function, and the like) in theoretical calculation of a load acting on a tensile test specimen. Furthermore, in a problem of occurrence of necking in the tensile test specimen or in the onset of the necking, difference in distribution of a strain ratio in a width direction affects the accuracy of a yield function assumed in advance in large, and there is a possibility that an error occurs when the requirements deviate from actual conditions. In particular, after occurrence of the necking in the thickness direction of the tensile test specimen, the tensile test specimen is affected by shearing in the thickness direction, but the yield function that does not consider the shearing in the thickness direction may lead to increase in the error. Furthermore, in these methods, a camera is used to measure the strain, and therefore, the methods are not suitable for continuously collecting data from the start of application of the tensile load to a strain portion exceeding uniform elongation, and are performed on the assumption that a regression curve of the relationship between stress and strain is obtained from time series data of discrete strains.

Furthermore, in the shearing tests of Non Patent Literature 4 and Patent Literature 2, shear deformation is applied without occurrence of the necking in the specimen, and advantageously measures the relationship between stress and strain until occurrence of the fracture. However, a large-scale special test machine is required that fixedly holds front and back surfaces of a rectangular specimen on both sides in the width direction with a chuck, moves the chuck in relative directions, and causes the shear deformation in a plane of the specimen. In addition, tensile deformation caused at an end portion of the specimen does not provide pure shear deformation, thickness reduction at the end portion of the specimen is increased, leading to a problem of causing an error.

The present invention has been made to solve the above problems, and an object of the present invention is to provide a stress-strain curve estimation method that enables direct estimation of a relationship between stress and strain in a strain portion larger than uniform elongation of a metal material with high accuracy in a deformation state with no necking.

Solution to Problem

A stress-strain curve estimation method according to the present invention estimates a relationship between stress and strain of a metal material and includes: a first torsion test step of applying a torsional torque $T_1$ around an axis of a first round-bar specimen having a reduced section of a round bar-shape having a first radius $R_1$ to perform a first torsion test for shear deformation of the reduced section, and acquiring a relationship between the torsional torque $T_1$ and a torsional angle $\Phi_1$; a second torsion test step of applying a torsional torque $T_2$ around an axis of a second round-bar specimen having a reduced section of a round bar-shape having a second radius $R_2$ smaller than the first radius $R_1$ to perform a second torsion test for shear deformation of the reduced section, and acquiring a relationship between the torsional torque $T_2$ and a torsional angle $\Phi_2$; and a sheared stress-surface shear strain curve acquisition step of obtaining a relationship between a sheared stress $\tau$ and a shear strain $\gamma$ of surface on a surface of the reduced section of the first round-bar specimen by using the relationship between the torsional torque $T_1$ and the torsional angle $\Phi_1$ acquired in the first torsion test step and the relationship between the torsional torque $T_2$ and the torsional angle $\Phi_2$ acquired in the second torsion test step; and a stress-strain curve estimation step of converting the sheared stress $\tau$ and the shear strain $\gamma$ of surface acquired in the sheared stress-surface shear strain curve acquisition step into a stress $\sigma$ and a strain $\varepsilon$ in simple tension to estimate a relationship between the stress $\sigma$ and the strain $\varepsilon$ in the simple tension, wherein in the sheared stress-surface shear strain curve acquisition step, the sheared stress $\tau$ is obtained using the torsional torque $T_1$ at the torsional angle $\Phi_1$ acquired in the first torsion test step and a torsional torque $T_2'$ when the torsional angle $\Phi_2$ acquired in the second torsion test step is aligned with the torsional angle $\Phi_1$ acquired in the first torsion test step, and the shear strain $\gamma$ of surface is obtained using the torsional angle $\Phi_1$ acquired in the first torsion test step.

In the sheared stress-surface shear strain curve acquisition step, the sheared stress $\tau$ may be calculated by Formula (1), and the shear strain $\gamma$ of surface may be calculated by Formula (2).

$$\tau = \frac{3(T_1 - T_2')}{2\pi(R_1^3 - R_2^3)} \qquad \cdots (1)$$

$$\gamma = \frac{(R_1 + R_2)\theta_1}{2} \qquad \cdots (2)$$

$\tau$ : Sheared stress (Pa)
$\gamma$ : Shear strain of surface (-)
$T_1$ : First torsional torque (Nm)

$T_2'$ : Second torsional torque (Nm)

$R_1$ : Radius of reduced section of first round - bar specimen (m)
$R_2$ : Radius of reduced section of second round - bar specimen (m)
$\theta_1$ : Torsional angle per unit length in axial direction (= $\Phi_1/L$)(rad/m)
$\Phi_1$ : First torsional angle (rad)
L : Length of reduced section of first torsion specimen (m)

The first round-bar specimen and the second round-bar specimen each may have grip portions extending longitudinally outward from both ends of the reduced section via gradual change portions, in an elastic region, the torsional angle $\Phi_1$ acquired in the first torsion test step and the torsional angle $\Phi_2$ acquired in the second torsion test step may be set as a torsional angle $\Phi_e$ estimated to be proportional to a measurement value $T_e$ of torsional torque, and in an elastoplastic deformation portion, a measurement value $\phi_a$($\Phi_1$ or $\Phi_2$) of the torsional angle may be set as a torsional angle $\phi_t$ (= $\phi_a$ - ($\Phi$o - $\Phi_s$) - ($\Theta$(T) - $\Theta$ ($T_s$))) corrected using a difference (= $\Phi_0$ - $\Phi_s$) between a measurement value $\Phi_0$ and an estimated value $\Phi_s$ of torsional angle at an elastic limit being a boundary between the elastic region and the elastoplastic deformation portion, and an amount of change (= $\Theta$(T) - $\Theta$($T_s$)) of a torsional angle $\Theta$(T) of each of the gradual change portions of the first round-bar specimen or the second round-bar specimen, from a torsional angle $\Theta$($T_s$) at the elastic limit.

In the first torsion test step and the second torsion test step, gaps may be provided between the grip portions and specimen holders when gripping the grip portions at both longitudinal ends of each specimen by the specimen holders to apply a torsional torque to each of the first round-bar specimen and the second round-bar specimen. Advantageous Effects of Invention

According to the present invention, it is possible to directly and highly accurately acquire the relationship between stress and strain in the strain portion larger than uniform elongation exceeding uniform elongation in uniaxial tension of the metal material. In addition, it is possible to continuously acquire the relationship between stress and strain in the strain portion larger than uniform elongation with a relatively small compact test machine without requiring a large-scale test apparatus as in a conventional bulging test, compression test, or shearing test.

Brief Description of Drawings

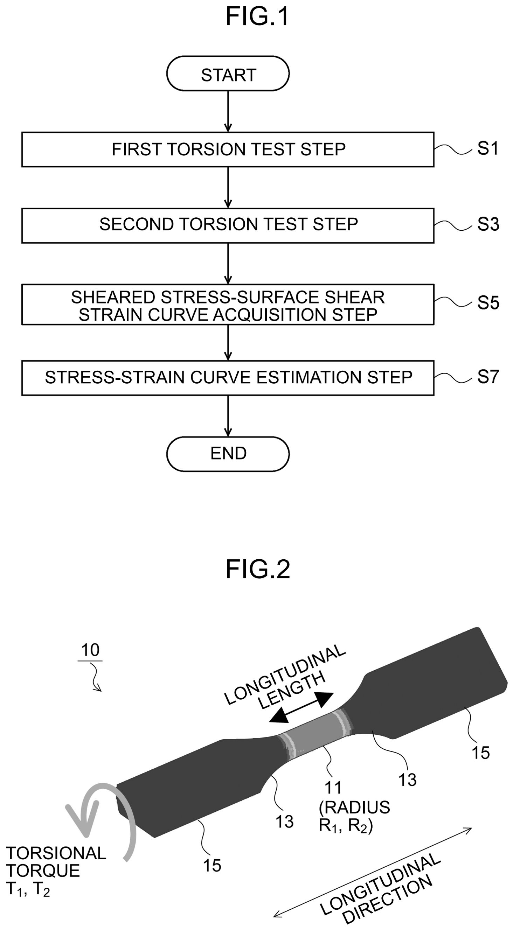

FIG. 1 is a flowchart illustrating a procedure of a process in a stress-strain curve estimation method according to an embodiment of the present invention.
FIG. 2 is a diagram illustrating an example of a round-bar specimen used in a torsion test for shear deformation by application of a torsional torque in the stress-strain curve estimation method according to an embodiment of the present invention.

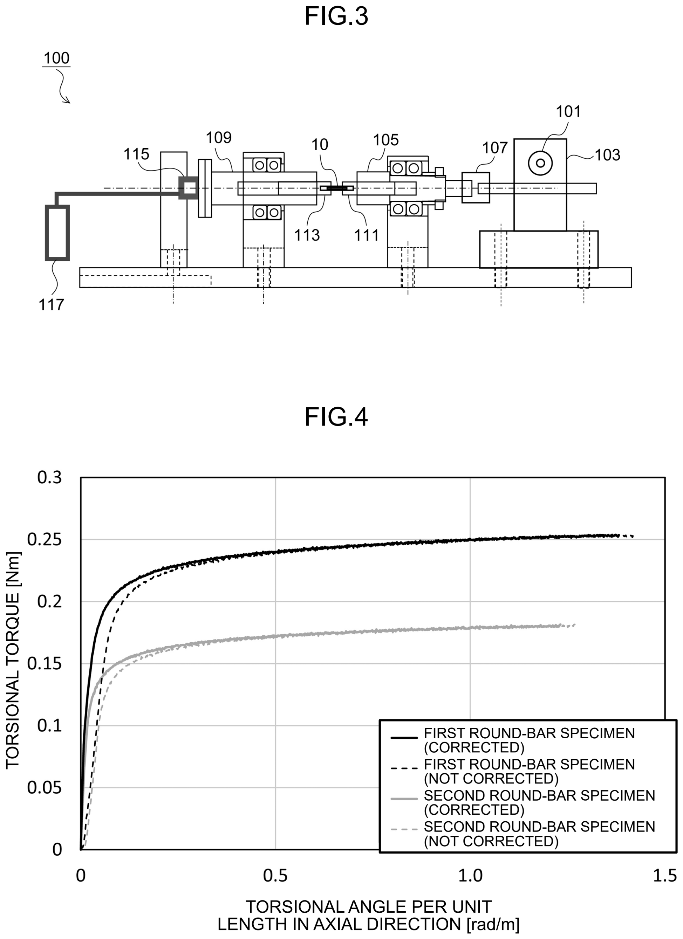

FIG. 3 is a diagram illustrating a torsion test machine for micro round lod used in the stress-strain curve estimation method according to an embodiment of the present invention.
FIG. 4 is a graph of relationships between torsional angles and torsional torques, acquired by a torsion test using round-bar specimens having reduced sections with different radii, in the stress-strain curve estimation method according to an embodiment of the present invention, illustrating the relationships between torsional angles and torsional torques depending on whether the torsional angles are corrected.

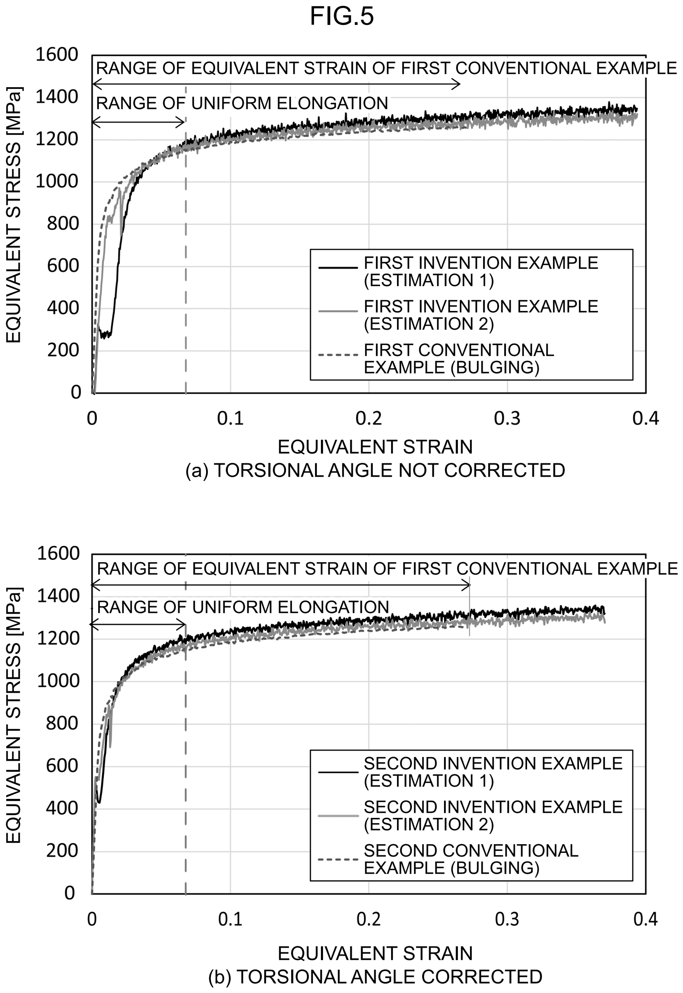

FIG. 5 are graphs illustrating results (first invention examples and second invention examples) of estimation of a relationship between stress and strain in uniaxial tension by performing a torsion test using a round-bar specimen formed from a steel plate having a tensile strength of 980 MPa grade and a thickness of 1.2 mm, and a relationship between stress and strain (first conventional example) acquired by a conventional bulging test ((a) torsional angle not corrected (first invention example), (b) torsional angle corrected (second invention example)), in an example.

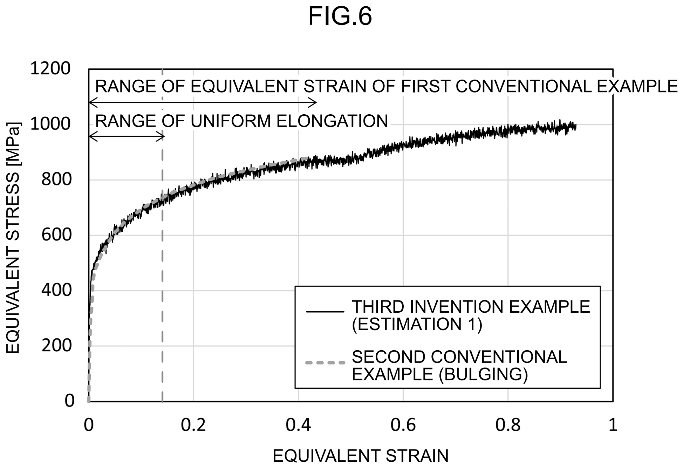

FIG. 6 is a graph illustrating a result (third invention example) of estimation of a relationship between stress and strain in uniaxial tension by performing a torsion test using a round-bar specimen formed from a steel plate having a tensile strength of 590 MPa grade and a thickness of 1.2 mm, and a relationship between stress and strain (second conventional example) acquired by a conventional bulging test, in an example.

Description of Embodiments

Prior to description of a stress-strain curve estimation method according to an embodiment of the present invention, the background to the present invention and a round-bar specimen and a torsion test machine for micro round rod that are used for carrying out the present invention will be described.

<Background to invention>

The inventors have focused on shear deformation by a torsion test using a round-bar specimen, as a deformation state in which necking is less likely to occur than in tensile deformation by a normal uniaxial tensile test and large deformation in a strain portion larger than uniform elongation, exceeding uniform elongation is applicable. However, shear strain of the round-bar specimen linearly increases radially outward from a cross-sectional center (axial center) of the round-bar specimen and is distributed concentrically from the axial center, thus, and therefore, the shear strain in a cross section is not uniform.
Therefore, the inventors have intensively studied a method to determine sheared stress and shear strain by the torsion test using the round-bar specimen. As a result, in a torsion test using round-bar specimens having diameters slightly different (e.g., diameters of 1 mm and 1.1 mm), the present inventors have focused on the assumption that sheared stress $\tau$ generated on surfaces of the round-bar specimens has no large difference depending on a slight difference in diameter. The inventors have found that the assumption as described above enables calculation of the sheared stress $\tau$ acting on the surfaces of the round-bar specimens from a difference in torsional torque in the torsion test of the round-bar specimens.
Then, the inventors have conceived approximation of the shear strain of the round-bar specimen subjected to shear deformation with an average value of a shear strain of surface generated by the torsion tests of the round-bar specimens having slightly different diameters. Therefore, it has been conceived to determine a relationship between sheared stress and shear strain of surface by a torsion test of two types of round-bar specimens having slightly different diameters.
Furthermore, the inventors have conceived that the isotropy of a material is assumed to correct actual anisotropy of a metal material based on a result of the uniaxial tensile test, and that the sheared stress and the shear strain of surface obtained by the torsion test of two types of round-bar specimens having different diameters are converted into stress and strain in uniaxial tension. As a result, the present inventors have conceived that estimation of the relationship between stress and strain in uniaxial tension in the strain portion larger than uniform elongation, exceeding the uniform elongation is enabled.

<Round-bar specimen>

A round-bar specimen 10 is obtained by cutting work of a minute metal piece cut out from a metal plate (e.g., a steel plate having a thickness of 1.2 mm) while rotating the metal piece about a rotation axis extending in a longitudinal direction. As illustrated in FIG. 2, the round-bar specimen 10 includes a reduced section 11 that has a round bar shape and grip portions 15 that extend longitudinally outward from both longitudinal ends of the reduced section 11 via gradual change portions 13.
The reduced section 11 is obtained by cutting work of the metal plate into the round bar shape having a predetermined diameter smaller than the thickness of the metal plate. The diameter of the reduced section 11 is preferably as small as possible from the viewpoint of shear deformation, but is preferably approximately 1 mm from the viewpoint of dimensional accuracy. Furthermore, a longitudinal length of the reduced section 11 is not particularly limited and may be appropriately set, and is preferably, for example, approximately 2 to 3 mm. Each of the gradual change portions 13 is a portion that is formed between the reduced section 11 and each of the grip portions 15 and that has a diameter gradually changes. The grip portions 15 are flat plate portions (fixed regions) that are fixedly gripped by the specimen holders 111 and 113 of a torsion test machine 100 for micro round rod which is described later. A thickness of each grip portion 15 is preferably the same as that of, for example, the metal plate used for the round-bar specimen 10.

<Torsion test machine for micro round rod>

FIG. 3 illustrates an example of the torsion test machine 100 for micro round rod that performs a torsion test using the round-bar specimen 10. As illustrated in FIG. 3, the torsion test machine 100 for micro round rod includes a step motor 101, a reduction gear 103, a rotation side of torsional axis 105, a coupling 107, a fixed side of torsional axis 109, specimen holders 111 and 113, a torque meter 115, and an amplifier 117.

The rotation side of torsional axis 105 is connected to the step motor 101 via the coupling 107 and the reduction gear 103. Meanwhile, the fixed side of torsional axis 109 is connected to the torque meter 115, and the amplifier 117 is connected to the torque meter 115. Then, a command value of the step motor 101 and an output from the amplifier 117 are collected by a measurement recorder (not illustrated). The rotation side of torsional axis 105 and the fixed side of torsional axis 109 are provided with the specimen holders 111 and 113 that grip the grip portions 15 of the round-bar specimen 10 at both longitudinal ends, in order to apply a torsional torque to the round-bar specimen 10.

When the torsion test of the round-bar specimen 10 is performed by the torsion test machine 100 for micro round rod, first, the grip portions 15 of the round-bar specimen 10 are gripped by the specimen holder 111 near the rotation side of torsional axis 105 and the specimen holder 113 near the fixed side of torsional axis 109.

Then, when a predetermined command value is input to the step motor 101, a torsional torque T is applied to a grip portion 15 of the round-bar specimen 10 via the reduction gear 103, the coupling 107, the rotation side of torsional axis 105, and the specimen holder 111, causing shear deformation in the reduced section 11. A torsional angle $\Phi$ of the round-bar specimen 10 to which the torsional torque has been applied may be estimated from the command value of the step motor 101 and a reduction ratio of the reduction gear 103, or may be directly measured by installing a potentiometer or the like enabling measurement of a rotation angle of a rotation shaft of the reduction gear 103.

In the torsion test machine 100 for micro round rod, it is important that the axes of the rotation side of torsional axis 105 and the fixed side of torsional axis 109 are aligned with each other in terms of accuracy in torsional torque measurement. Therefore, the torsion test machine 100 for micro round rod is preferably provided with a facility for adjustment for centering the specimen holders 111 and 113 on both sides.

<Stress-strain curve estimation method>

The stress-strain curve estimation method according to an embodiment of the present invention is used to acquire the relationship between stress and strain of a metal material. As illustrated in FIG. 1, the stress-strain curve estimation method includes a first torsion test step S1, a second torsion test step S3, a sheared stress-surface shear strain curve acquisition step S5, and a stress-strain curve estimation step S7. Hereinafter, it is assumed that the stress-strain curve estimation method according to the present embodiment is performed using the torsion test machine 100 for micro round rod illustrated in FIG. 3, and the steps described above will be described.

<<First torsion test step>>

In the first torsion test step S1, a torsional torque $T_1$ is applied around axis of a first round-bar specimen 10 having the reduced section 11 of round bar-shape having a first radius $R_1$ to perform a first torsion test for shear deformation of the reduced section 11. Then, a relationship between the torsional torque $T_1$ applied to the first round-bar specimen in the first torsion test and a torsional angle $\Phi_1$ of the first round-bar specimen 10 is acquired. In the first torsion test step S1, a relationship between the torsional torque $T_1$ and the torsional angle $\Phi_1$ up to a maximum torsional angle at which a crack occurs in the reduced section 11 of the first round-bar specimen 10 is preferably acquired.

<<Second torsion test step>>

In the second torsion test step S3, a torsional torque $T_2$ is applied about an axis of a second round-bar specimen 10 having the reduced section 11 of round bar shape having a second radius $R_2$ that is smaller than the first radius $R_1$ to perform a second torsion test for shear deformation of the reduced section 11. Then, a relationship between the torsional torque $T_2$ applied to the second round-bar specimen 10 in the second torsion test and a torsional angle $\Phi_2$ of the second round-bar specimen 10 is acquired.

In the second torsion test step S3, a relationship between the torsional torque $T_2$ and the torsional angle $\Phi_2$ up to a maximum torsional angle at which a crack occurs in the reduced section 11 of the second round-bar specimen 10 is preferably acquired.

<<sheared stress-surface shear strain curve acquisition step>>

In the sheared stress-surface shear strain curve acquisition step S5, a relationship between the sheared stress $\tau$

and shear strain $\gamma$ of surface on the surface of the reduced section 11 of the first round-bar specimen 10 is obtained. In order to obtain the relationship between the sheared stress $\tau$ and the shear strain $\gamma$ of surface, the relationship between the torsional torque $T_1$ and the torsional angle $\Phi_1$ acquired in the first torsion test step S1 and the relationship between the torsional torque $T_2$ and the torsional angle $\Phi_2$ acquired in the second torsion test step S3 are used.

The sheared stress $\tau$ is obtained using the torsional torque $T_1$ at the torsional angle $\Phi_1$ acquired in the first torsion test step S1 and a torsional torque $T_2$' when the torsional angle $\Phi_2$ acquired in the second torsion test step S3 is aligned with the torsional angle $\Phi_1$. Meanwhile, the shear strain $\gamma$ of surface is obtained using the torsional angle $\Phi_1$ acquired in the first torsion test step S1.

The sheared stress $\tau$ can be obtained from the following formula (1) and the shear strain $\gamma$ of surface can be obtained from the following Formula (2).

$$\tau = \frac{3(T_1 - T_2')}{2\pi(R_1^3 - R_2^3)} \qquad \cdots (1)$$

$$\gamma = \frac{(R_1 + R_2)\theta_1}{2} \qquad \cdots (2)$$

$\tau$ : Sheared stress (Pa)

$\gamma$ : Shear strain of surface (-)

$T_1$ : First torsional torque (Nm)

$T_2'$ : Second torsional torque (Nm)

$R_1$ : Radius of reduced section of first round - bar specimen (m)

$R_2$ : Radius of reduced section of second round - bar specimen (m)

$\theta_1$ : Torsional angle per unit length in axial direction (= $\Phi_1/L$)(rad/m)

$\Phi_1$ : First torsional angle (rad)

L : Length of reduced section of first torsion specimen (m)

The sheared stress $\tau$ expressed by Formula (1) is derived as follows. When the first round-bar specimen 10 (radius $R_1$) and the second round-bar specimen (radius $R_2$, $R_1 > R_2$) that have reduced sections 11 (FIG. 2) of round bar-shape having different radii have equal torsional angles per unit length, both shear strain distributions ranging from the axial centers to $R_2$ in a cross section of the reduced sections 11 are equal. Therefore, stress distributions that generate the torques of the first and second round-bar specimens 10 are also equal. Therefore, a difference ($T_1$ - $T_2$') between the torque $T_1$ on the first round-bar specimen 10 and the torque $T_2$' on the second round-bar specimen 10 represents a torque that is generated in "an annular portion (ring portion) extending in the first round-bar specimen 10, from the radius $R_2$ to the radius $R_1$ outside the radius $R_2$". Considering that the shear strain generated in the reduced section 11 is proportional to a distance from the axial center, it can be assumed that the torque and the shear strain in the ring portion of the first round-bar specimen 10 are constant under a condition that the difference ($R_1$ - $R_2$) between the radii of the first round-bar specimen 10 and the second round-bar specimen 10 is very small. From this assumption, the sheared stress $\tau$ on the surface of the reduced section 11 can be expressed by Formula (1). In addition, the shear strain $\gamma$ of surface shown in Formula (2) is obtained by approximation with an average value of shear strains generated on the surfaces of the reduced sections 11 in the torsion tests for the first and second round-bar specimens 10.

<<Stress-strain curve estimation step>>

In the stress-strain curve estimation step S7, the sheared stress $\tau$ and the shear strain $\gamma$ of surface which are acquired in the sheared stress-surface shear strain curve acquisition step S5 are converted into a stress $\sigma$ and a strain $\varepsilon$ in simple tension, respectively, and a relationship between the stress $\sigma$ and the strain $\varepsilon$ in uniaxial tension is estimated.

The stress $\sigma$ and the strain $\varepsilon$ in uniaxial tension are allowed to be converted by the following Formulas (3) and (4), respectively. Formula (3) is obtained by deriving the strain $\varepsilon$ in uniaxial tension by using the shear strain $\gamma$ of surface and the sheared stress $\tau$ on the assumption of equivalent plastic work in an isotropic steel sheet (Mises material). The derivation uses a relationship between strain and shear strain in uniaxial tension and a relationship between stress and sheared stress, which are obtained in a plastic region, a relationship between stress and strain in uniaxial tension using a Young's modulus E in an elastic region, and a relationship between the sheared stress and the shear strain using a shearing modulus G. Furthermore, the derivation of Formula (3) uses a definition formula of a relationship between "elastoplastic strain", "elastic strain", and "plastic strain" in uniaxial tension, and a definition formula of a relationship between "elastoplastic shear strain", "elastic shear strain", and "plastic shear strain" in shearing. In addition, Formula (4) is obtained by correcting a relational expression between the stress $\sigma$ and the sheared stress $\tau$ in uniaxial tension on the assumption of an equivalent plastic strain in the isotropic steel sheet (Mises material), in consideration of anisotropy of the metal material.

$$\varepsilon = \frac{\gamma}{\sqrt{3}\cdot A} + \tau\left(-\frac{1}{G\sqrt{3}\cdot A} + \frac{\sqrt{3}\cdot A}{E}\right) \qquad \cdots (3)$$

$$\sigma = \tau\sqrt{3}\cdot A \qquad \cdots (4)$$

In Formulas (3) and (4), A is a correction factor in consideration of the anisotropy of the metal material. When the metal material has no anisotropy (isotropy), A = 1. Meanwhile, when the metal material has the anisotropy, a value of A determined based on the stress-strain curve up to the uniform elongation in the uniaxial tensile test is preferably given. As the anisotropy of the metal material, it is known that particularly a metal material manufactured by rolling has a characteristic change in a rolling direction (L direction), in a direction perpendicular to the rolling direction (C direction), and in a direction of 45° (D direction). Therefore, for example, when the tensile test specimen is sampled from the metal material, a plurality of the tensile test specimens are preferably sampled in a longitudinal direction corresponding to the anisotropy of the metal material for the uniaxial tensile test to determine the value of A. In the Formula (3), E is a Young's modulus, and a value measured by the uniaxial tensile test of the metal material is preferably used. Furthermore, G is the shearing modulus, and is preferably calculated based on the Young's modulus E measured by the uniaxial tensile test and a Poisson's ratio (when the metal material is a steel plate, a value of 0.28 to 0.30) of the metal material.

As described above, according to the stress-strain curve estimation method according to the present embodiment, it is possible to estimate the stress-strain curve in the strain portion larger than uniform elongation, exceeding the uniform elongation in uniaxial tension of the metal material. In addition, in the stress-strain curve estimation method according to the present embodiment, the torsion tests using the round-bar specimens having diameters of approximately 1 mm are performed. Therefore, a large-scale apparatus as in a conventional bulging test, compression test, or shearing test is not required to perform the torsion tests using the compact torsion test machine 100 for micro round rod being compact and having a relatively small scale, making it possible to estimate the relationship between stress and strain in the strain portion larger than uniform elongation.

In the stress-strain curve estimation method according to the present embodiment, the sheared stress $\tau$ acting on the surface of the reduced section 11 in each of the first and second round-bar specimens 10 is obtained on the assumption that the difference in diameter of the reduced section 11 has no large difference in the sheared stress $\tau$, as described above (see Formula (1)). Therefore, the smaller the difference between the first radius $R_1$ of the reduced section 11 of the first round-bar specimen 10 and the second radius $R_2$ of the reduced section 11 of the second round-bar specimen 10, the more accurately the sheared stress $\tau$ can be estimated. However, the difference between the first radius $R_1$ and the second radius $R_2$ is preferably approximately 0.1 mm and more, and more preferably approximately 0.05 mm, in terms of restriction on processing accuracy of the round-bar specimen 10.

Furthermore, in the above description, in the first torsion test step S1 and the second torsion test step S3, the torsion tests have been performed using the torsion test machine 100 for micro round rod to acquire the relationships between the torsional torques and the torsional angles of the two types of round-bar specimens 10 having different diameters. However, the torsion test machine 100 for micro round rod has mechanical backlash (backlash of the reduction gear 103, and backlash between chucking portions of the test specimen holders 111 and 113 and the grip portions 15 of the round-bar specimen 10). Therefore, the torsional angle acquired in the elastic region immediately after the start of application of the torsional torque about the axis of the round-bar specimen 10 has a large error.

Therefore, the torsional angles ($\Phi_1$ and $\Phi_2$) acquired in the first torsion test step S1 and the second torsion test step S3 are preferably corrected as follows.

First, it is determined whether the shear deformation of each round-bar specimen 10 is in the elastic region or an elastoplastic deformation portion, in each of the torsion tests. The elastic region and the elastoplastic deformation portion can be determined, for example, based on the following Formula (5).

$$T_e < T_s = \frac{\pi R^3 Y_s}{2\sqrt{3} \cdot A} \qquad \cdots (5)$$

$T_e$ is a measurement value ($T_1$ or $T_2$) of the torsional torque applied to each of the first and second round-bar specimens 10, and $T_s$ is a torsional torque at a boundary (elastic limit) between the elastic region and the elastoplastic deformation portion. Furthermore, R is a radius ($R_1$ or $R_2$) of the reduced section 11 of each round-bar specimen 10, and $Y_s$ is a yield stress of uniaxial tensile of the metal material used for the round-bar specimen 10. Furthermore, A is the correction factor in consideration of the anisotropy of the metal material, as in Formulas (3) and (4).

Then, when the measurement value $T_e$ of the torsional torque in the torsion test is smaller than $T_s$, it is determined that the shear deformation in the reduced section 11 of the round-bar specimen 10 is in the elastic region. Meanwhile, when the measurement value $T_e$ of the torsional torque is equal to or larger than $T_s$, it is determined that the shear deformation in the reduced section 11 of the round-bar specimen 10 is in the elastoplastic deformation portion.

When it is determined that the shear deformation is in the elastic region, the torsional angle of the round-bar specimen 10 is determined to be proportional to the measurement value $T_e$ of the torsional torque, and is set as a torsional angle $\Phi_e$ estimated by the following Formula (6).

$$\Phi_e = \frac{2T_e}{\pi G R^4} \qquad \cdots (6)$$

G is the shearing modulus (MPa) of the round-bar specimen, and R is the radius (mm) of the reduced section 11 of the round-bar specimen 10.

Meanwhile, when it is determined that the shear deformation is in the elastoplastic deformation portion, the torsional angle acquired by the torsion test is corrected by offsetting a difference ($= \Phi_0 - \Phi_s$) between a measurement value $\Phi_0$ and an estimated value $\Phi_s$ of the torsional angle at the elastic limit. $\Phi_s$ is a torsional angle estimated when the measurement value $T_e$ of the torsional torque is the torsional torque $T_s$ at the elastic limit, in Formula (6).

Furthermore, in the round-bar specimen 10, the radius of each gradual change portion 13 between the grip portion 15 and the reduced section 11 changes in the longitudinal direction. Therefore, the torsional angle of the round-bar specimen 10 is further corrected with an amount of change ($= \Theta(T) - \Theta(T_s)$) of a torsional angle $\Theta$ of the gradual change portion 13 from the elastic limit, based on the torsional angle $\Theta$ of the gradual change portion 13 given by Formula (7). $\Theta(T)$ is a torsional angle of the gradual change portion 13 at the torsional torque T, and $\Theta(T_s)$ is a torsional angle of the gradual change portion 13 at the elastic limit (torsional torque $T_s$).

$$\Theta(T) = \frac{4T}{\pi G} \int_0^{x_1} \frac{1}{R^4} dx \qquad \cdots (7)$$

In other words, when it is determined that the shear deformation is in the elastoplastic deformation portion, a value $\phi_t$ obtained by correcting a measurement value $\phi_a$ of the torsional angle by using the following Formula (8) is set as the torsional angle of the round-bar specimen 10.

$$\phi_t = \phi_a - (\Phi_0 - \Phi_s) - \big(\Theta(T) - \Theta(T_s)\big) \qquad \cdots (8)$$

FIG. 4 illustrates a graph in which relationships between torsional angles per unit length in axial direction depending on whether the torsional angles are corrected and the torsional torques, in the torsion tests using the two types of round-bar specimens 10 having the reduced section 11 of different diameters. The graph illustrated in FIG. 4 shows results of use of the round-bar specimens 10 formed from a steel plate having a tensile strength of 980 MPa grade and a thickness of 1.2 mm, and the reduced section 11 of the first round-bar specimen 10 has a diameter of 1.1 mm, and the reduced section 11 of the second round-bar specimen 10 has a diameter of 1 mm. Furthermore, the horizontal axis of FIG. 4 represents torsional angles $\theta_1$ and $\theta_2$ per unit length in axial direction obtained by dividing the torsional angles $\Phi_1$ and $\Phi_2$ of the first round-bar specimen 10 and the second round-bar specimen 10 by a longitudinal length L of each reduced section 11.

As illustrated in FIG. 4, in a region having a small torsional angle, the error in the torsional angle is large due to the mechanical backlash of the torsion test machine 100 for micro round rod, as described above, and therefore, it can be seen that a difference occurs in the torsional torque depending on whether the torsional angle is corrected.

In a normal torsion test machine for round rod, the grip portions 15 of the round-bar specimen 10 are generally completely chucked by the specimen holders 111 and 113. However, in the torsion test machine 100 for micro round rod using the round-bar specimen 10 having the reduced section 11 with a diameter of approximately $\phi$1 mm, an extremely slight axial misalignment between the rotation side of torsional axis 105 and the fixed side of torsional axis 109 of the torsion test machine 100 for micro round rod affects accuracy in measurement of the torsional torque.

Therefore, in the first torsion test step S1 and the second torsion test step S3, gaps are preferably provided between the grip portions 15 and the specimen holders 111 and 113 to grip the grip portions 15 at both longitudinal ends of each round-bar specimen 10 by the specimen holders 111 and 113. The gaps are each preferably about 10 to 20 $\mu$m. This configuration enables free movement of the grip portions 15 without being fixed by the specimen holders 111 and 113 upon start of application of torsional torque to each round-bar specimen 10. Therefore, it is possible to alleviate abnormality such as fluctuation of torque generated in the round-bar specimen 10 due to the axial misalignment between the rotation side of torsional axis 105 and the fixed side of torsional axis 109, improving the accuracy in measurement of the torsional torque.

[Example]

A description will be made below of an experiment that was performed for verifying the functions and effects of the stress-strain curve estimation method according to the present invention.

In the present example, relationships between stress and strain of steel plates having a tensile strength of 980 MPa grade and a tensile strength of 590 MPa grade as the metal materials were estimated by the method according to the embodiment described above.

First, the two types of first and second round-bar specimens 10 having the reduced sections 11 of different diameters as illustrated in FIG. 3 were prepared from a steel plate having a thickness of 1.2 mm. The diameter of the reduced section 11 of the first round-bar specimen 10 was 1.1 mm, and the diameter of the reduced section 11 of the second round-bar specimen 10 was 1.0 mm.

Next, for each of the prepared first and second round-bar specimens 10, the torsion test was performed using the torsion test machine 100 for micro round rod illustrated in FIG. 2, and the relationship between the torsional torque applied to each round-bar specimen 10 and the torsional angle of each round-bar specimen 10 was acquired.

Then, the sheared stress and the shear strain of surface acting on the surface of the reduced section 11 of the first round-bar specimen 10 were calculated, from the relationship between the torsional torque and the torsional angle acquired for each of the first and second round-bar specimens 10. For the calculation of the sheared stress and the shear strain of surface, Formulas (1) and (2) described above were used.

Subsequently, the calculated sheared stress and shear strain of surface were converted into stress (equivalent stress) and strain (equivalent strain) in uniaxial tension by Formulas (3) and (4) described above, and the relationship between stress and strain was estimated.

Furthermore, in the present example, as described in the embodiment, the stress and strain were also estimated, when the sheared stress and the shear strain of surface were calculated by correcting the torsional angles acquired in the torsion tests of the first and second round-bar specimens 10 as well. In the correction of the torsional angle, for the yield stress of uniaxial tensile Ys and the shearing modulus G, values measured by the uniaxial tensile tests of the steel plates having the respective tensile strengths were used.

In addition, in the present example, a relationship between stress and strain was acquired for comparison by a bulging test. In the bulging test as well, specimens prepared from the steel plates having a tensile strengths of 980 MPa grade and 590 MPa grade and a thickness of 1.2 mm were used as test pieces.

FIG. 5 illustrates a graph in which results of estimation of the relationship between stress and strain (the equivalent stress and the equivalent strain) in uniaxial tension by the method according to the present invention, and a result of the relationship between the equivalent stress and the equivalent strain acquired by the bulging test are compared, for the steel plate of 980 MPa grade. In the uniaxial tensile test of the steel plate of 980 MPa grade, uniform elongation was 7.0% (true strain 0.068).

In FIG. 5, first invention examples and second invention examples represent stress-strain curves of results of estimation of the relationship between stress and strain of the prepared round-bar specimens 10, performed N times = twice, FIG. 5(a) illustrates the first invention examples representing results of the estimation with the torsional angle $\Phi$ not corrected, and FIG. 5(b) illustrates the second invention examples representing results of the estimation with the torsional angle $\Phi$ corrected. In addition, a first conventional example represents a stress-strain curve acquired by the bulging test.

As illustrated in FIG. 5, the first invention examples and the first conventional example match well, and it can be seen that in the first invention examples, even the strain portion larger than uniform elongation, 35% wider than that of the first conventional example, can be estimated. In addition, comparison between the first invention examples of FIG. 5(a) and the second invention examples of FIG. 5(b) shows that correction of the torsional angles $\Phi$ acquired by the torsion tests enables particularly reduction of variation in the elastic region.

FIG. 6 illustrates a graph in which a result (third invention example) of estimation of the relationship between stress and strain (the equivalent stress and the equivalent strain) in uniaxial tension by the method according to the present invention, and a result (second conventional example) of the relationship between the equivalent stress and the equivalent strain acquired by the bulging test are compared, for the steel plate of 590 MPa grade. In the uniaxial tensile test of the steel plate of 590 MPa grade, uniform elongation was 15.1% (true strain 0.141). In FIG. 6, the third invention example represents a stress-strain curve of a result of estimation of the relationship between stress and strain of the prepared round-bar specimen 10, performed N times = once, and the second conventional example represents a stress-strain curve acquired by the bulging test. Furthermore, the third invention example represents a result of the estimation with the torsional angle acquired by the torsion test corrected.

As illustrated in FIG. 6, in the third invention example representing estimation for the steel plate having a tensile strength of 590 MPa grade, it was possible to estimate the relationship between stress and strain up to the strain portion larger than uniform elongation four times or more larger than that in the second conventional example of the bulging test.

Industrial Applicability

According to the present invention, it is possible to provide the stress-strain curve estimation method enabling estimation of the relationship between stress and strain in the strain portion larger than uniform elongation of the metal material directly with high accuracy, in the deformation state with no necking. Reference Signs List

10 ROUND-BAR SPECIMEN

11 REDUCED SECTION

13 GRADUAL CHANGE PORTION

15 GRIP PORTION

100 TORSION TEST MACHINE FOR MICRO ROUND ROD

101 STEP MOTOR

103 REDUCTION GEAR

105 ROTATION SIDE OF TORSIONAL AXIS

107 COUPLING

109 FIXED SIDE OF TORSIONAL AXIS

111 SPECIMEN HOLDER

113 SPECIMEN HOLDER

115 TORQUEMETER

117 AMPLIFIER

**Claims**

1.  A stress-strain curve estimation method for estimating a relationship between stress and strain of a metal material, the method comprising:

    a first torsion test step of

    applying a torsional torque $T_1$ around an axis of a first round-bar specimen having a reduced section of a round bar-shape having a first radius $R_1$ to perform a first torsion test for shear deformation of the reduced section, and
    acquiring a relationship between the torsional torque $T_1$ and a torsional angle $\Phi_1$;

a second torsion test step of

applying a torsional torque $T_2$ around an axis of a second round-bar specimen having a reduced section of a round bar-shape having a second radius $R_2$ smaller than the first radius $R_1$ to perform a second torsion test for shear deformation of the reduced section, and

acquiring a relationship between the torsional torque $T_2$ and a torsional angle $\Phi_2$; and

a sheared stress-surface shear strain curve acquisition step of obtaining a relationship between a sheared stress $\tau$ and a shear strain $\gamma$ of surface on a surface of the reduced section of the first round-bar specimen by using the relationship between the torsional torque $T_1$ and the torsional angle $\Phi_1$ acquired in the first torsion test step and the relationship between the torsional torque $T_2$ and the torsional angle $\Phi_2$ acquired in the second torsion test step; and

a stress-strain curve estimation step of converting the sheared stress $\tau$ and the shear strain $\gamma$ of surface acquired in the sheared stress-surface shear strain curve acquisition step into a stress $\sigma$ and a strain $\varepsilon$ in simple tension to estimate a relationship between the stress $\sigma$ and the strain $\varepsilon$ in the simple tension,

wherein in the sheared stress-surface shear strain curve acquisition step,

the sheared stress $\tau$ is obtained using the torsional torque $T_1$ at the torsional angle $\Phi_1$ acquired in the first torsion test step and a torsional torque $T_2$' when the torsional angle $\Phi_2$ acquired in the second torsion test step is aligned with the torsional angle $\Phi_1$ acquired in the first torsion test step, and

the shear strain $\gamma$ of surface is obtained using the torsional angle $\Phi_1$ acquired in the first torsion test step.

**2.** The stress-strain curve estimation method according to claim 1, wherein in the sheared stress-surface shear strain curve acquisition step, the sheared stress $\tau$ is calculated by Formula (1), and the shear strain $\gamma$ of surface is calculated by Formula (2).

$$\tau = \frac{3(T_1 - T_2')}{2\pi(R_1^3 - R_2^3)} \qquad \cdots (1)$$

$$\gamma = \frac{(R_1 + R_2)\theta_1}{2} \qquad \cdots (2)$$

$\tau$ : Sheared stress (Pa)
$\gamma$ : Shear strain of surface (-)
$T_1$ : First torsional torque (Nm)
$T_2'$ : Second torsional torque (Nm)
$R_1$ : Radius of reduced section of first round - bar specimen (m)
$R_2$ : Radius of reduced section of second round - bar specimen (m)
$\theta_1$ : Torsional angle per unit length in axial direction (= $\Phi_1/L$)(rad/m)
$\Phi_1$ : First torsional angle (rad)
L : Length of reduced section of first torsion specimen (m)

**3.** The stress-strain curve estimation method according to claim 1 or 2, wherein

the first round-bar specimen and the second round-bar specimen each have grip portions extending longitudinally outward from both ends of the reduced section via gradual change portions,

in an elastic region, the torsional angle $\Phi_1$ acquired in the first torsion test step and the torsional angle $\Phi_2$ acquired in the second torsion test step are set as a torsional angle $\Phi_e$ estimated to be proportional to a measurement value $T_e$ of torsional torque, and

in an elastoplastic deformation portion, a measurement value $\phi_a(\Phi_1$ or $\Phi_2)$ of the torsional angle is set as a torsional angle $\phi_t (= \phi_a - (\Phi_0 - \Phi_s) - (\Theta(T) - \Theta(T_s)) )$ corrected using a difference (= $\Phi_0 - \Phi_s$) between a measurement value $\Phi_0$ and an estimated value $\Phi_s$ of torsional angle at an elastic limit being a boundary between the elastic region and the elastoplastic deformation portion, and an amount of change (= $\Theta(T) - \Theta(T_s)$) of a torsional angle $\Theta(T)$ of each of the gradual change portions of the first round-bar specimen or the second round-bar specimen, from a torsional angle $\Theta(T_s)$ at the elastic limit.

4. The stress-strain curve estimation method according to claim 1 or 2, wherein in the first torsion test step and the second torsion test step, gaps are provided between the grip portions and specimen holders when gripping the grip portions at both longitudinal ends of each specimen by the specimen holders to apply a torsional torque to each of the first round-bar specimen and the second round-bar specimen.

# FIG.1

```
        ┌─────────┐
        │  START  │
        └─────────┘
             │
             ▼
┌───────────────────────────────────┐
│      FIRST TORSION TEST STEP      │～ S1
└───────────────────────────────────┘
             │
             ▼
┌───────────────────────────────────┐
│     SECOND TORSION TEST STEP      │～ S3
└───────────────────────────────────┘
             │
             ▼
┌───────────────────────────────────┐
│   SHEARED STRESS-SURFACE SHEAR    │～ S5
│   STRAIN CURVE ACQUISITION STEP   │
└───────────────────────────────────┘
             │
             ▼
┌───────────────────────────────────┐
│  STRESS-STRAIN CURVE ESTIMATION STEP │～ S7
└───────────────────────────────────┘
             │
             ▼
        ┌─────────┐
        │   END   │
        └─────────┘
```

# FIG.2

# FIG.3

# FIG.4

# FIG.5

(a) TORSIONAL ANGLE NOT CORRECTED

(b) TORSIONAL ANGLE CORRECTED

# FIG.6

## INTERNATIONAL SEARCH REPORT

| International application No. |
| --- |
| **PCT/JP2024/015860** |

**A. CLASSIFICATION OF SUBJECT MATTER**

*G01N 3/22*(2006.01)i; *G01N 3/24*(2006.01)i
FI: G01N3/22; G01N3/24

According to International Patent Classification (IPC) or to both national classification and IPC

**B. FIELDS SEARCHED**

Minimum documentation searched (classification system followed by classification symbols)

G01N3/22; G01N3/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-234991 A (SANYO SPECIAL STEEL CO., LTD.) 29 August 2000 (2000-08-29) entire text | 1-4 |
| A | JP 2009-192391 A (NATIONAL UNIVERSITY CORPORATION KOBE UNIVERSITY) 27 August 2009 (2009-08-27) entire text | 1-4 |
| A | WO 2012/141170 A1 (KOKUSAI KEISOKUKI KK) 18 October 2012 (2012-10-18) entire text | 1-4 |
| A | CN 105445122 A (JIANGLING HOLDINGS CO., LTD.) 30 March 2016 (2016-03-30) entire text | 1-4 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 May 2024** | **04 June 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/015860**

| Patent document cited in search report | | | Publication date (day/month/year) | Patent family member(s) | Publication date (day/month/year) |
|---|---|---|---|---|---|
| JP | 2000-234991 | A | 29 August 2000 | (Family: none) | |
| JP | 2009-192391 | A | 27 August 2009 | (Family: none) | |
| WO | 2012/141170 | A1 | 18 October 2012 | US          8984965          B2 entire text | |
| CN | 105445122 | A | 30 March 2016 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5910803 B
- JP 6669290 B

### Non-patent literature cited in the description

- **NASSER, A. et al.** *J. Mater. Proc. Technol.*, 2010, vol. 210, 429-436
- **IWATA et al.** *JOURNAL OF THE JAPAN SOCIETY FOR TECHNOLOGY OF PLASTICITY SOSEI-TO-KAKO*, 2013, vol. 54-632, 836-840
- **SUMIKAWA et al.** *JOURNAL OF THE JAPAN SOCIETY FOR TECHNOLOGY OF PLASTICITY SOSEI-TO-KAKO*, 2021, vol. 62-727, 103-108
- **SHIRAKAMI et al.** *TETSU-TO-HAGANE*, 2017, vol. 103-10, 589-595